# EUROPEAN PATENT SPECIFICATION

(11) **EP 2 172 099 B1**
(45) Date of publication and mention of the grant of the patent: **24.08.2016**
(21) Application number: 08777776.9
(22) Date of filing: 02.07.2008
(51) Int. Cl.: A01K 1/01, A01K 23/00

(54) **EXCREMENT DISPOSAL SHEET AND ANIMAL TOILET UTILIZING THE SAME**
EXKREMENTEN ABSORBIERENDE EINLAGE FÜR HAUSTIERTOILETTE UND VERWENDENDUNG LETZTEREN
FEUILLE ABSORBANTE D'EXCRÉMENTS POUR TOILETTE POUR ANIMAL DOMESTIQUE ET UTILISATION DE CETTE DERNIÈRE

(30) Priority: 11.07.2007 JP 2007182501
(43) Date of publication of application: 07.04.2010
(73) Proprietor: Unicharm Corporation, Ehime 799-0111 (JP)
(72) Inventor: HIROSHIMA, Kenji, Tokyo 108-6326 (JP); MATSUO, Takayuki, Tokyo 108-6326 (JP); IKEGAMI, Takeshi, Tokyo 108-6326 (JP)
(74) Representative: Dolleymores
(86) International application number: PCT/JP2008/061973
(87) International publication number: WO 2009/008300

(56) References cited:
- EP-A1- 1 498 028
- JP-A- 11 332 413
- JP-A- 2004 001 373
- JP-A- 2005 006 604
- JP-A- 2006 181 355
- US-A1- 2006 200 105

## Description

### TECHNICAL FIELD

The present invention relates to an excrement disposal sheet and an animal toilet utilizing the same, more particularly to an excrement disposal sheet that can be repeatedly used for an extended period of time and an animal toilet utilizing the same.

### BACKGROUND ART

As an animal toilet in which a pet such as cat kept indoors excretes urine and feces, one disclosed in Japanese Unexamined Patent Application Publication No. H10-229768 (hereinafter referred to as Patent Document 1) can be exemplified. In the pet toilet, water repellent particulate material is placed in a container having a liquid permeable bottom portion, on which the particulate material is dispersed, the bottom portion is configured with a sheet of a liquid permeable structure. An absorbent sheet supported by a support body is disposed below the sheet of a liquid permeable structure in close contact with the sheet.

In addition, Japanese Unexamined Patent Application Publication No. 2005-6604 (hereinafter referred to as Patent Document 2) discloses a pet toilet system that can be continuously used for an extended period of time, for example 3 to 10 days, while preventing bad odors, and a sheet provided with an antibacterial portion used as an absorbent sheet for the pet toilet system.

### DISCLOSURE OF THE INVENTION

### Problems to be Solved by the Invention

In the pet toilets disclosed in Patent Documents 1 and 2, it is required to replace the absorbent sheet accordingly and thus replacement frequency thereof is preferably lower. In general, the absorbent sheet is configured to have an absorption capacity for bearing repeated excretion.

Here, the conventional absorbent sheet disclosed in Patent Document 2 is in a bilayered structure having an upper layer and a lower layer, or in a single layered structure, in which a greater amount of high absorbent polymer is present in the upper layer of the bilayered structure or in an upper portion of an absorbent core of the single layered structure.

In a case where the water absorption (water retention) amount of the upper portion of the absorbent core is thus at least equal to that of a lower portion of the absorbent core, an absorptive material, which is turned into a deep urine color due to absorbed urine, is easily visible from a sheet surface and gives a wet and unsanitary appearance. In addition, since the wet appearance of the surface may give an impression of urine overflowing from the absorbent core of the sheet in spite of sufficient absorption capacity remaining, a user may exchange the sheet more frequently than necessary, thus requiring a greater cost than supposed.

The present invention has been made in view of the foregoing problem, and aims at providing an excrement disposal sheet that can prevent a consumer from replacing absorbent sheets frequently by preventing an excessively unsanitary appearance on an absorbent sheet for an animal toilet, and an animal toilet using the excrement disposal sheet.

### Means for Solving the Problems

In order to solve the foregoing problem, the present inventors have conducted extensive research. As a result, the inventors have found that the foregoing problem can be solved by configuring an absorbent sheet with a low absorbency portion and a high absorbency portion, disposing the high absorbency portion on a lower side of the sheet (back sheet side), thus leading to the completion of the present invention. More specifically, the present invention provides the following.

The present invention provides the excrement disposal sheet of independent claim 1, the animal toilet of claim 7 and the use of an excrement disposal sheet of claim 8. The dependent claims specify preferred but optional features.

In a first aspect of the present invention, an excrement disposal sheet that is disposed inside a toilet container body that an animal enters and exits in order to excrete, at a position where an excrement of the animal can be absorbed and substantially no weight of the animal is applied, includes: a top sheet that is liquid permeable; a back sheet that is liquid impermeable; and an absorbent sheet that is disposed between the top sheet and the back sheet, in which: the absorbent sheet includes at least an absorbent layer of 100 to 600 g/m2 in basis weight and high-absorbent resin that is dispersed in the absorbent layer; and a low excrement absorbency portion that is directed toward the top sheet and a high excrement absorbency portion that is directed toward the back sheet are formed in the absorbent layer. The high-absorbent resin is not present in the low excrement absorbency portion and is dispersed inside the high excrement absorbency portion.

According to the excrement disposal sheet (hereinafter referred to simply as sheet) of the present invention, since the low excrement absorbency portion (hereinafter referred to simply as low absorbency portion) that is lower in liquid absorption capacity than the back sheet side is directed toward the liquid permeable top sheet, excreted liquid poured on the absorbent sheet is scarcely absorbed by the low absorbency portion on the top sheet side, but absorbed by the high excrement absorbency portion (hereinafter referred to simply as high absorbency portion) on the back sheet side. The excreted liquid is thus retained in the high absorbency portion, and the low absorbency portion covers and masks the high absorbency portion that has been soiled. This does not give an excessively unsanitary appearance to a consumer looking at the excrement disposal sheet in use. As a result, replacing the sheet more than necessary can be avoided and a duration of use thereof can be extended.

Here, "a position where excrement of the animal can be absorbed and substantially no weight of the animal is applied" indicates a positional relationship between the sheet and the toilet container body. For example, not only in a case where, as in Patent Document 2, the liquid permeable bottom portion of the toilet container body, on which the particulate material is dispersed, is disposed away from the sheet, but also in a case where, as in Patent Document 1, the liquid permeable bottom portion is in contact with the excrement disposal sheet, as long as the bottom portion is rigid and no weight is applied to the excrement disposal sheet, the sheet is considered to be at the "position where excrement of the animal can be absorbed and substantially no weight of the animal is applied".

The fact is closely related to a mode of usage of the excrement disposal sheet of the present invention. In a case where the excrement disposal sheet configured according to the present invention is used as a conventional sheet on which an animal steps, excrement such as urine is temporarily absorbed by an absorbent layer composed of pulp and the like but not retained by high-absorbent resin, since no high-absorbent resin or only a slight amount thereof is disposed on a top sheet side of the sheet. As a result, if a weight of an animal is applied from the top sheet side, backset of a liquid (rewetting) occurs. Therefore, the excrement disposal sheet according to the present invention can be preferably used as an excrement disposal sheet that is disposed at a position where excrement of the animal can be absorbed and substantially no weight of the animal is applied, in other words as an excrement disposal sheet for a so-called system toilet.

In addition, the absorbent layer of 100 to 600 g/m² basis weight is an absorbent layer practically excepting thin paper such as simple tissue. Conventionally, colored tissue paper has been used as a masking layer disposed on an absorbent sheet; however, in the present invention, the low absorbency portion in the absorbent layer retains liquid while acting as a masking layer. In other words, a masking layer is not necessarily separately provided.

It should be noted that the absorbent layer can have either only one layer as a whole or at least two separate layers. In a case where the absorbent layer has at least two separate layers, each layer can be composed of different materials. In a case where the absorbent layer has only one layer as a whole, a boundary between the low absorbency portion and the high absorbency portion is not required to be clear. A specific example of such a configuration is a case where a dispersion ratio of the high-absorbent resin is continuously increased from the low absorbency portion toward the high absorbency portion.

According to a second aspect of the present invention, in the excrement disposal sheet as described in the first aspect, a dispersion ratio of the high-absorbent resin increases step-wise or continuously from the low excrement absorbency portion toward the high excrement absorbency portion.

The present mode presents a specific method for forming the low absorbency portion and the high absorbency portion. According to the mode, since no high-absorbent resin is present in the low absorbency portion on the top sheet side, transfer of an excreted liquid is not blocked by the high-absorbent resin that swells during use. In other words, the present mode can prevent insufficient transfer of excrement to a lower side (the back sheet side) and insufficient absorption thereof due to the high-absorbent resin being swelled and expanded at a position close to the top sheet.

Here, "dispersion ratio" indicates a mass ratio of the high-absorbent resin that is present in each layer in the absorbent sheet after manufacturing thereof. For example, in a case where 140 g/m² high-absorbent resin is dispersed in a layer of 200 g/m² pulp, the dispersion ratio (%) is (140/340) × 100 = 41%.

A case where the dispersion ratio of the high-absorbent resin is increased stepwise is for example a case where the absorbent layer consists of at least two layers and the layers have different dispersion ratios. On the other hand, a case where the dispersion ratio of the high-absorbent resin is continuously increased is for example a case where the absorbent layer consists of one layer, as described above, and the distribution of the dispersion ratio within the layer is increased in a gradient.

According to a third aspect of the present invention, in the excrement disposal sheet as described in the first or second aspect, the absorbent layer is a pulp layer.

According to the invention of the third aspect, by making the absorbent layer a pulp layer, moderate liquid retention and liquid permeability can be obtained simultaneously. This configuration can realize the effect of the present invention even in a case where the low absorbency portion consists only of a pulp layer and the high-absorbent resin is not present therein.

According to a fourth aspect of the present invention, in the excrement disposal sheet as described in any one of the first to third aspects, the absorbent layer includes at least two layers in which a low excrement absorbency layer that constitutes the low excrement absorbency portion and a high excrement absorbency layer that constitutes the high excrement absorbency portion are stacked.

According to the invention of the fourth aspect, by configuring the excrement disposal sheet in a multi-layered structure, the excrement disposal sheet of the present invention can be easily manufactured. In other words, the excrement disposal sheet can be easily manufactured by sequentially layering the low excrement absorbency layer with no high-absorbent resin and the high excrement absorbency layer with a high dispersion ratio of the high-absorbent resin. In addition, in such a configuration, the dispersion ratio of the high-absorbent resin can be easily adjusted.

According to a fifth aspect of the present invention, in the excrement disposal sheet as described in the fourth aspect, the dispersion ratio of the high-absorbent resin is zero in the low excrement absorbency layer and less than 70% in the high excrement absorbency layer.

According to the invention of the fifth aspect, by configuring the dispersion ratio of the high-absorbent resin in the low excrement absorbency layer to be 0%, the unsanitary appearance of the excrement disposal sheet felt by a consumer looking at the excrement disposal sheet during use thereof can be greatly reduced compared to a conventional product. By configuring the dispersion ratio of the high-absorbent resin in the high excrement absorbency layer to be within the abovementioned range, a problem of lowered liquidity of an excreted liquid due to the high-absorbent resin swelling and insufficient absorption of the excreted liquid by other high-absorbent resin can be avoided, thereby efficiently absorbing liquid by the high-absorbent resin. Preferably, the dispersion ratio of the high-absorbent resin in the high excrement absorbency layer is no less than 20% and less than 70%.

It should be noted that, as shown in the Examples described later, although the high-absorbent resin in an uppermost portion of the absorbent sheet (a surface on the top sheet side) is required to be within a range of 0 to 10 g/m², the high-absorbent resin is not present in the uppermost portion for obtaining a masking effect according to the present invention.

According to a sixth aspect of the present invention, in the excrement disposal sheet as described in any one of the first to fifth aspects, a masking sheet of 10 to 35 g/m² in basis weight is disposed between the top sheet and the absorbent sheet.

According to the invention of the sixth aspect, by disposing the masking sheet between the top sheet and the absorbent sheet, an excrement disposal sheet can be obtained in which an unsanitary appearance felt by a consumer can further be avoided. In this case, the masking sheet is preferably colored for higher masking properties. As the masking sheet, thin paper such as tissue can be preferably exemplified; however, the present invention is not limited thereto.

In a seventh aspect of the present invention, an animal toilet includes: a toilet container body that an animal enters and exits in order to excrete; and an excrement disposal sheet that is disposed inside the toilet container body, at a position where an excrement of the animal can be absorbed and substantially no weight of the animal is applied, in which the excrement disposal sheet is the excrement disposal sheet as described in any one of the first to sixth aspects.

The invention according to the seventh aspect is realized by applying the excrement disposal sheet according to any one of the first to sixth aspects to a so-called system toilet of which required components are a toilet container body and an excrement disposal sheet. A system toilet that provides the same effects as the above first to sixth aspects can thus be obtained. Particularly in this toilet, the sheet is disposed at a position where substantially no weight of the animal is applied. This can prevent backset of an excreted liquid (rewetting) that is temporarily absorbed by the low absorbency portion due to pressure applied to the excrement disposal sheet.

In other words, the present invention also provides a mode of usage of an animal toilet including a toilet container body that an animal enters and exits to excrete and an excrement disposal sheet according to any one of the first to the sixth aspects that is accommodated and disposed in the toilet container body, in which the excrement disposal sheet is disposed at a position where excrement of the animal can be absorbed and substantially no weight of the animal is applied.

### Effects of the Invention

According to the present invention, an unsanitary appearance of the excrement disposal sheet can be avoided by increasing excrement masking properties. This can extend the duration of use of the excrement disposal sheet and extend replacement frequency thereof, thereby providing a cost effective excrement disposal sheet.

### BRIEF DESCRIPTION OF THE DRAWINGS

FIG. 1 is a diagram showing a cross-section of an excrement disposal sheet of the present invention; and
FIG. 2 is a diagram showing a mode of usage of the excrement disposal sheet of the present invention and an animal toilet of the present invention.

### PREFERRED MODE FOR CARRYING OUT THE INVENTION

An embodiment of the present invention is described hereinafter with reference to the drawings of Examples. It should be noted that the present invention is no way limited to the embodiments, and can be changed and implemented as necessary within the scope of the object of the present invention. In the following description, the same components are denoted by the same reference numerals and redundant descriptions may be omitted.

### Overall Structure of Excrement Disposal Sheet

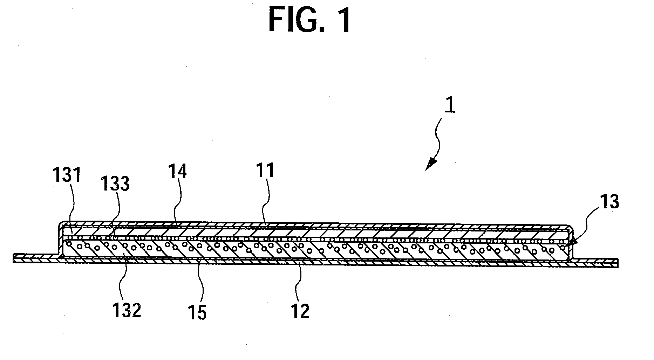

FIG. 1 is a cross-sectional view of an embodiment of the excrement disposal sheet of the present invention. An excrement disposal sheet 1 includes a liquid permeable top sheet 11, a liquid impermeable back sheet 12, and an absorbent sheet 13 that is liquid absorbent and held between the liquid permeable top sheet 11 and the liquid impermeable back sheet 12. An upper layer absorbent paper 14 (the masking sheet in the present invention) is disposed between an upper portion of the absorbent sheet 13 and the liquid permeable top sheet 11, and a lower layer absorbent paper 15 is disposed between a lower portion of the absorbent sheet 13 and a liquid impermeable back sheet 12.

The liquid permeable top sheet 11 is a liquid permeable nonwoven fabric, though not particularly limited as long as a liquid can pass therethrough. More specifically, a point bonded nonwoven fabric, through-air nonwoven fabric, spun lace nonwoven fabric, spun bonded nonwoven fabric and the like can be used. The liquid impermeable back sheet 12 is a liquid impermeable film, though not particularly limited as long as a liquid cannot pass therethrough. More specifically, polyethylene, polypropylene, polyethylene terephthalate and the like can be used.

The upper layer absorbent paper 14 and the lower layer absorbent paper 15 are, for example, an absorbent paper having a basis weight of 10 to 35 g/m². No less than 10 g/m² in basis weight is preferable for having superior strength and being not easily breakable, and the no greater than 35 g/m² in basis weight is preferable for not excessively absorbing moisture. More preferably, the basis weight thereof is in a range of 15 to 25 g/m². In addition, the density thereof is preferably in a range of 80 to 250 g/L. As such an absorbent paper, an absorbent paper such as tissue can be exemplified. The upper layer absorbent paper 14 has an effect of masking dirt adhering to the absorbent sheet 13.

### Absorbent Sheet

The absorbent sheet 13 includes: a low excrement absorbency portion 131 that is lower in liquid absorption capacity than the back sheet 12 side and disposed on the liquid permeable top sheet 11 side; and a high excrement absorbency portion 132 that is substantially higher in liquid absorption capacity than the low excrement absorbency portion 131 and disposed on the liquid impermeable back sheet 12 side. In addition, in the present embodiment, a high-absorbent resin 133 is dispersed between the low excrement absorbency portion 131 and the high excrement absorbency portion 132. Furthermore, in the present invention, the high-absorbent resin 133 is not present in the low excrement absorbency portion 131 and is dispersed inside the high excrement absorbency portion 132.

The high-absorbent resin 133 is not particularly limited, and for example, a resin that is generally highly absorbent such as polyacrylic polymer, starch-acrylic acid polymer and the like can be used. In addition, the high-absorbent resin 133 that is held between the low excrement absorbency portion 131 and the high excrement absorbency portion 132 can be either the same as that included in the high excrement absorbency portion 132 or different therefrom.

The absorbent sheet 13 is 100 to 600 g/m² in basis weight as a whole. A basis weight of no less than 100 g/m² is preferable for having instant absorbent properties, and a basis weight of no greater than 600 g/m² is preferable for transferring urine toward a lowermost layer without retaining in an upper layer. More preferably, the basis weight thereof is in a range of 150 to 500 g/m².

The density of the absorbent sheet 13 is in a range of 25 to 300 g/L. A density of no less than 25 g/L is preferable for not disproportioning the absorbent core when a product is placed on a tray, and a density of no greater than 300 g/L is preferable for not making fiber density too high. As a result, such an absorbent sheet 13 is preferable for improving instant penetration of a liquid and preventing the liquid from spreading too widely. More preferably, the density thereof is in a range of 35 to 150 g/L.

More specifically, as the low excrement absorbency portion 131, a cellulosic fiber such as pulp, regenerated pulp and wood powder, a nonwoven fabric such as point bonded nonwoven fabric and through-air nonwoven fabric, and a foam material can be exemplified, though not particularly limited as long as being a material having a water retention capacity of no greater than 4 times. Among these, the cellulosic fiber and the nonwoven fabric, which are fibers or a material obtained by bonding fibers, are preferable. A hydrophilic material, an absorbent material, or a hydrophobic material having a water retention capacity of no greater than 4 times are preferably used as a material constituting the low excrement absorbency portion 131. Among these, the hydrophilic material and the absorbent material are preferable for ease of absorption of urine. As used herein, "water retention capacity" indicates a remaining water absorption amount after immersing 5 g of a material used as the low excrement absorbency portion 131 in water for 10 minutes, and then performing centrifugal dehydration thereof at 150 G for 90 seconds.

The low excrement absorbency portion 131 is configured without including the high-absorbent resin.

The high excrement absorbency portion 132 is obtained by mixing particles of high-absorbent resin into the abovementioned hydrophilic material, absorbent material, or hydrophobic material. Among these, the hydrophilic material and the absorbent material are preferred as in the low excrement absorbency portion. In addition, in the present embodiment, a material for the high excrement absorbency portion 132 is pulp; however, the hydrophilic material, absorbent material, or hydrophobic material can be either the same as or different from the low excrement absorbency portion. In a case where different materials are used, the high excrement absorbency portion 132 acts as the high excrement absorbency layer of the present invention and the low excrement absorbency portion 131 acts as the low excrement absorbency layer.

A mixing proportion of the high-absorbent resin in the high excrement absorbency portion 132 is less than 70%. The mixing proportion no less than 70% is not preferable since distribution of the high-absorbent resin can be easily disproportionated. More preferably, the mixing proportion thereof is less than 55%.

### Mode of Usage

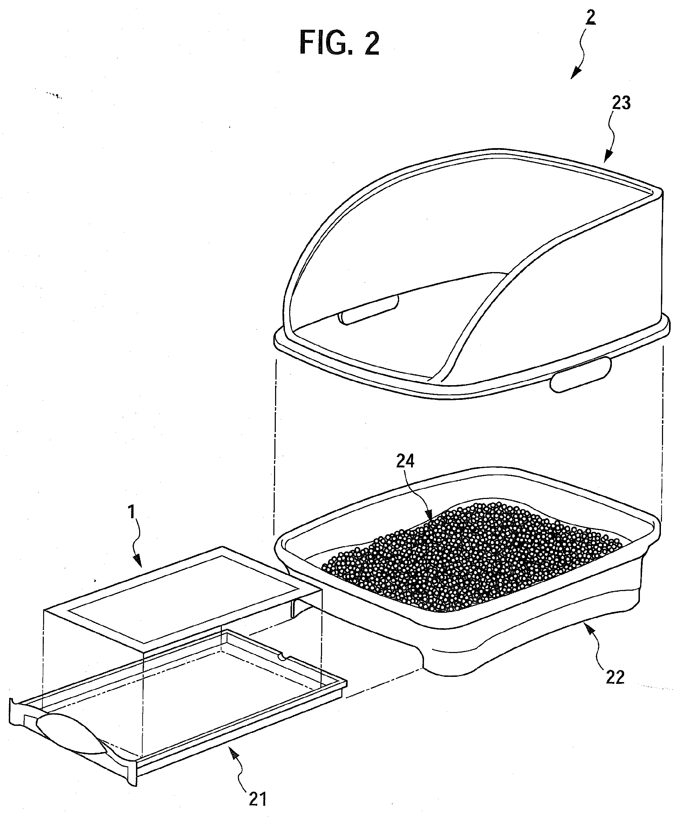

The animal toilet 2 shown in FIG. 2 shows an example of a mode of usage using the excrement disposal sheet of the present invention. This is also an animal toilet according to the present invention. The excrement disposal sheet 1 of the present invention is provided, along with conventionally known particulate material 24, for a pet toilet consisting of: a particulate material container 22 provided with a cover 23 for restricting (specifying) an entrance for a pet and a liquid permeable bottom face portion on which the particulate material is dispersed; and an excrement disposal sheet container 21 in which the excrement disposal sheet 1 is disposed at a position below the bottom face portion of the particulate material container 22.

In the present embodiment, the liquid permeable bottom portion of the toilet container body, on which the particulate material is dispersed, is disposed away from the sheet and the excrement disposal sheet 1 is disposed at the position where no weight of the animal is applied. Therefore, a weight of an animal is not applied from the top sheet side and backset of a liquid (rewetting) does not occur. As described above, the excrement disposal sheet according to the present invention can be preferably used for a so-called system toilet.

### EXAMPLES

The present invention is described in further detail hereinafter with reference to examples.

### Relationship Between Dispersion Amount of High-Absorbent Resin and Masking Properties

The high-absorbent resin in an amount shown in Table 1 was dispersed between the upper layer absorbent paper 14 and the absorbent sheet 13 in the following Example. Thereafter, 20 cc of cat urine (collected from a plurality of healthy cats) was dripped from above the top sheet 11 three times at 5 minutes intervals. Subsequently, a depth of urine color on a surface was visually determined from a height of 50 cm. The results thereof are shown in Table 1. In Table 1, "Excellent" indicates excellent masking properties, "Good" indicates good masking properties, "Moderate" indicates moderate masking properties, and "Poor" indicates poor masking properties.

**Table 1**

| Dispersion Amount (g/m²) | 0 | 5 | 10 | 15 | 20 |
|---|---|---|---|---|---|
| Masking Properties | Excellent | Good | Moderate | Poor | Poor |

As apparent from the results shown in Table 1, from a viewpoint of the masking properties, the amount of the high-absorbent resin dispersed in an upper portion is preferably smaller, required to be no greater than 10 g/m², more preferably no greater than 5 g/m², and most preferably zero.

### Example

The excrement disposal sheet 1 of a structure shown in FIG. 1 was prepared in the following configuration and a masking properties test was conducted as above. As a result, the masking properties were Excellent and masking effect thereof was confirmed.
Top sheet 11: 18 g/m² hydrophilic polypropylene point-bonded nonwoven fabric
Back sheet 12: 25 g/m² polyethylene film
Absorbent sheet 13 (low excrement absorbency portion disposed in an upper layer): 100 g/m² pulp
High-absorbent resin 133 disposed in an intermediate layer: 70 g/m²
Absorbent sheet 13 (high excrement absorbency portion disposed in a lower layer): 140 g/m² high-absorbent resin and 200 g/m² pulp
Upper layer absorbent paper 14 (masking sheet): 13.5 g/m² tissue (white), 0.12 mm in thickness
Lower layer absorbent paper 15 (masking sheet): 13.5 g/m² tissue (white), 0.12 mm in thickness

### Comparative Example

A sheet of Comparative Example was prepared in the same configuration as the Example, except for the high-absorbent resin dispersed in the low excrement absorbency portion 131 in the embodiment being 40 wt%. As a result, the masking properties were Moderate and masking effect thereof was insufficient.

## Claims

1. An excrement disposal sheet (1) to be disposed inside an animal toilet, the excrement disposal sheet (1) comprising:
a top sheet (11) that is liquid permeable, a back sheet (12) that is liquid impermeable, and an absorbent sheet (13) that is disposed between the top sheet (11) and the back sheet (12),
wherein the absorbent sheet (13) includes at least an absorbent layer of 100 to 600 g/m² in basis weight and high-absorbent resin (133) that is dispersed in the absorbent layer, and
a low excrement absorbency portion (131) that is directed toward the top sheet (11) and a high excrement absorbency portion (132) that is directed toward the back sheet (12) are formed in the absorbent layer; **characterised in that**
the high-absorbent resin is not present in the low excrement absorbency portion and is dispersed inside the high excrement absorbency portion.

2. The excrement disposal sheet according to claim 1,
wherein a dispersion ratio of the high-absorbent resin (133) increases step-wise or continuously from the low excrement absorbency portion (131) toward the high excrement absorbency portion (132).

3. The excrement disposal sheet according to claim 1 or 2,
wherein the absorbent layer is a pulp layer.

4. The excrement disposal sheet according to any one of claims 1 to 3,
wherein the absorbent layer includes at least two layers in which a low excrement absorbency layer that constitutes the low excrement absorbency portion (131) and a high excrement absorbency layer that constitutes the high excrement absorbency portion (132) are stacked.

5. The excrement disposal sheet according to claim 4,
wherein the dispersion ratio of the high-absorbent resin (133) is less than 70% in the high excrement absorbency layer.

6. The excrement disposal sheet according to any one of claims 1 to 5,
wherein a masking sheet (14) of 10 to 35 g/m² in basis weight is disposed between the top sheet (11) and the absorbent sheet (13).

7. An animal toilet (2) comprising:
a toilet container body that an animal enters and exits in order to excrete; and
an excrement disposal sheet (1) that is disposed inside the toilet container body, at a position where an excrement of the animal can be absorbed and substantially no weight of the animal is applied,
wherein the excrement disposal sheet (1) is the excrement disposal sheet according to any one of claims 1 to 6.

8. Use of an excrement disposal sheet (1) according to any one of claims 1 to 6 in an animal toilet (2) including a toilet container body that an animal enters and exits to excrete, wherein the excrement disposal sheet is accommodated and disposed in the toilet container body, in which the excrement disposal sheet is disposed at a position where excrement of the animal can be absorbed and substantially no weight of the animal is applied

## Patentansprüche

1. Kotentsorgungseinlage (1) für Anordnung in einer Tiertoilette, wobei die Kotentsorgungseinlage (1) umfasst:
eine flüssigkeitsdurchlässige obere Lage (11), eine flüssigkeitsundurchlässige rückseitige Lage (12) und eine zwischen der oberen Lage (11) und der rückseitigen Lage (12) angeordnete saugfähige Lage (13),
wobei die saugfähige Lage (13) mindestens eine saugfähige Schicht mit einem Flächengewicht von 100 bis 600 g/m² und ein in der saugfähigen Schicht dispergiertes hochsaugfähiges Harz (133) umfasst und
in der saugfähigen Schicht eine der oberen Lage (11) zugekehrte Partie (131) mit geringem Kotaufnahmevermögen und eine der rückseitigen Lage (12) zugekehrte Partie (132) mit hohem Kotaufnahmevermögen ausgebildet sind; **dadurch gekennzeichnet, dass**
das hochsaugfähige Harz in der Partie mit geringem Kotaufnahmevermögen nicht vorhanden ist und in der Partie mit hohem Kotaufnahmevermögen dispergiert ist.

2. Kotentsorgungseinlage nach Anspruch 1,
wobei ein Dispersionsverhältnis des hochsaugfähigen Harzes (133) von der Partie (131) mit geringem Kotaufnahmevermögen aus in Richtung der Partie (132) mit hohem Kotaufnahmevermögen schrittweise oder kontinuierlich zunimmt.

3. Kotentsorgungseinlage nach Anspruch 1 oder 2,
wobei die saugfähige Schicht eine Zellstoffschicht ist.

4. Kotentsorgungseinlage nach einem der Ansprüche 1 bis 3,
wobei die saugfähige Schicht mindestens zwei Schichten umfasst, wobei eine Schicht mit geringem Kotaufnahmevermögen, welche die Partie (131) mit geringem Kotaufnahmevermögen bildet, und eine Schicht mit hohem Kotaufnahmevermögen, welche die Partie (132) mit hohem Kotaufnahmevermögen bildet, aufeinander gestapelt sind.

5. Kotentsorgungseinlage nach Anspruch 4,
wobei das Dispersionsverhältnis des hochsaugfähigen Harzes (133) in der Schicht mit hohem Kotaufnahmevermögen weniger als 70% beträgt.

6. Kotentsorgungseinlage nach einem der Ansprüche 1 bis 5,
wobei zwischen der oberen Lage (11) und der saugfähigen Lage (13) eine Abdecklage (14) mit einem Flächengewicht von 10 bis 35 g/m² angeordnet ist.

7. Tiertoilette (2), umfassend:
einen Toilettenbehälterkörper, den ein Tier zum Ausscheiden betritt und verlässt; und
eine Kotentsorgungseinlage (1), die im Toilettenbehälterkörper an einer Stelle angeordnet ist, wo ein Kot des Tieres absorbiert werden kann und wo im Wesentlichen kein Gewicht des Tieres zur Wirkung kommt,
wobei die Kotentsorgungseinlage (1) die Kotentsorgungseinlage nach einem der Ansprüche 1 bis 6 ist.

8. Anwendung einer Kotentsorgungseinlage (1) nach einem der Ansprüche 1 bis 6 in einer Tiertoilette (2) mit einem Toilettenbehälterkörper, den ein Tier zum Ausscheiden betritt und verlässt, wobei die Kotentsorgungseinlage in dem Toilettenbehälterkörper aufgenommen und angeordnet ist, in dem die Kotentsorgungseinlage an einer Stelle angeordnet ist, wo Kot des Tieres absorbiert werden kann und wo im Wesentlichen kein Gewicht des Tieres zur Wirkung kommt.

## Revendications

1. Feuillet pour l'élimination de déjections (1) à placer à l'intérieur de toilettes pour animal, le feuillet pour l'élimination de déjections (1) comprenant :
un feuillet supérieur (11) qui est perméable aux liquides, un feuillet inférieur (12) qui est imperméable aux liquides et un feuillet absorbant (13) qui est situé entre le feuillet supérieur (11) et le feuillet inférieur (12),
où le feuillet absorbant (13) inclut au moins une couche absorbante de 100 à 600 g/m² en poids et une résine hautement absorbante (133) qui est dispersée dans la couche absorbante et
une partie à faible pouvoir absorbant des déjections (131) qui est orientée vers le feuillet supérieur (11) et une partie à haut pouvoir absorbant des déjections (132) qui est orientée vers le feuillet inférieur (12) sont formées dans la couche absorbante ; **caractérisé en ce que**
la résine hautement absorbante n'est pas présente dans la partie à faible pouvoir absorbant des déjections et est dispersée dans la partie à haut pouvoir absorbant des déjections.

2. Feuillet pour l'élimination de déjections selon la revendication 1,
où un rapport de dispersion de la résine hautement absorbante (133) augmente par paliers ou en continu de la partie à faible pouvoir absorbant des déjections (131) à la partie à haut pouvoir absorbant des déjections (132).

3. Feuillet pour l'élimination de déjections selon la revendication 1 ou 2,
où la couche absorbante est une couche de pulpe.

4. Feuillet pour l'élimination de déjections selon l'une quelconque des revendications 1 à 3,
où la couche absorbante inclut au moins deux couches dans lesquelles une couche à faible pouvoir absorbant des déjections qui constitue la partie à faible pouvoir absorbant des déjections (131) et une couche à haut pouvoir absorbant des déjections qui constitue la partie à haut pouvoir absorbant des déjections (132) sont empilées.

5. Feuillet pour l'élimination de déjections selon la revendication 4,
où le rapport de dispersion de la résine hautement absorbante (133) est inférieur à 70 % dans la couche à haut pouvoir absorbant des déjections.

6. Feuillet pour l'élimination de déjections selon l'une quelconque des revendications 1 à 5,
où un feuillet de masquage (14) de 10 à 35 g/m² en poids est situé entre le feuillet supérieur (11) et le feuillet absorbant (13).

7. Toilettes pour animal (2) comprenant :
un corps de réceptacle de toilettes dans lequel un animal entre et duquel il sort pour effectuer ses déjections ; et
un feuillet pour l'élimination des déjections (1) qui est placé à l'intérieur du corps de réceptacle de toilettes à une position à laquelle une déjection de l'animal peut être absorbée et le poids de l'animal n'est substantiellement pas appliqué,
où le feuillet pour l'élimination de déjections (1) est le feuillet pour l'élimination de déjections selon l'une quelconque des revendications 1 à 6.

8. Utilisation d'un feuillet pour l'élimination de déjections (1) selon l'une quelconque des revendications 1 à 6 dans des toilettes pour animal (2) comprenant un corps de réceptacle de toilettes dans lequel un animal entre et duquel il sort pour effectuer ses déjections, où le feuillet pour l'élimination de déjections est logé et placé dans le corps de récipient de toilettes, le feuillet pour l'élimination des déjections étant à une position à laquelle une déjection de l'animal peut être absorbée et le poids de l'animal n'est substantiellement pas appliqué.
